# EUROPEAN PATENT SPECIFICATION

(11) **EP 1 666 820 B1**
(45) Date of publication and mention of the grant of the patent: **09.04.2014**
(21) Application number: 05103403.1
(22) Date of filing: 26.04.2005
(51) Int. Cl.: F25D 29/00, G06K 7/10

(54) **Refrigerator with improved RFID reader configuration**
Kühlgerät mit verbesserter RFID-Leser Anordnung
Réfrigérateur ayant une disposition améliorée des lecteurs de puces RFID

(30) Priority: 30.11.2004 KR 2004099391
(43) Date of publication of application: 07.06.2006
(73) Proprietor: Samsung Electronics Co., Ltd., Suwon-si, Gyeonggi-do, 443-742 (KR)
(72) Inventor: JUNG, Woon Sung, Suwon-Si, Gyeonggi-do (KR); KIM, Hoon, Yeongtong-Gu, Gyeonggi-Do (KR); SON, Chang Ho, Yeongtong-Dong,Yeongtong-Gu,Gyeonggi-Do (KR); PARK, You Na, Seoul (KR); LEE, Hye Rim, Gyeonggi-Do (KR)
(74) Representative: Hewett, Jonathan Michael Richard

(56) References cited:
- EP-A- 1 205 720
- US-A- 5 274 392
- US-A- 5 850 416
- US-A1- 2002 024 441
- US-A1- 2002 183 882
- US-A1- 2003 209 601
- PATENT ABSTRACTS OF JAPAN vol. 2002, no. 07, 3 July 2002 (2002-07-03) -& JP 2002 081848 A (TOSHIBA CORP), 22 March 2002 (2002-03-22)

## Description

The present invention relates refrigerator including an RFID reader comprising a planar antenna.

Radio Frequency Identification (RFID) is an automatic recognition technique, which uses radio frequencies and generally consists of RFID tags, RFID readers and a host computer. The RFID technique is employed by non-contact cards as a substitute for barcodes and magnetic cards and has recently been used in various fields, such logistics and storage management, and process management.

In addition to the above fields, the RFID technique is used in household electric appliances. For example, the RFID technique is employed in refrigerators. A conventional refrigerator, which is disclosed JP-A-2002-81848, comprises RFID readers installed in side walls, i.e., left and right walls, and rear walls of storage chambers, a control device performing a food treatment program for foods contained in the storage chambers, and a display unit installed on the outer wall of the refrigerator. In this conventional refrigerator, RFID tags attached to the foods and the RFID readers communicate with each other at regular intervals so as to check the quantity of the stored foods and to display the obtained quantity of the stored foods using the display unit, thereby allowing a user to frequently check whether or not foods have been consumed and/or remain.

That is, each of the RFID readers of the conventional refrigerator has a coil-shaped antenna installed therein. The antennas of the RFID readers generate magnetic fields of a designated frequency which induce currents in with the coil-shaped antennas of the RFID tags. When currents are induced in the antennas of the RFID tags, the RFID tags transmit data regarding the foods, stored in their memories, to the RFID readers using the induced currents, thereby communicating with the RFID readers.

In order to prevent the generation of a blind area, in which the RFID tags are not activated by the RFID readers, the conventional refrigerator comprises RFID readers installed on all walls of the storage chambers, thereby having high production costs. For example, in the case that foods are stored in a refrigerator comprising RFID readers installed only on side walls of storage chambers, when loop planes (inner surfaces formed by the turning of the coil-shaped antennas) of coil-shaped antennas of RFID tags attached to the foods are positioned in parallel with the bottom surfaces of the storage chambers, the loop planes of the coil-shaped antennas of the RFID tags are perpendicular to loop planes of the coil-shaped antennas of the RFID readers. Then, currents are not induced in the RFID tag antennas by the RFID readers. Thus, the RFID readers cannot sense the RFID tags. Accordingly, the conventional refrigerator is disadvantageous in that the RFID readers must be installed in upper and lower walls of the storage chambers as well as the side walls of the storage chambers.

US 2003/209601 relates to a system for tracking an article through identification of a smart tag associated with the article to be tracked.

US 6,703,935 relates to an antenna arrangement comprising at least two antenna loops disposed at an angle to define a detection region through which an object may pass.

US 2002/183882 relates to a system providing a restricted access unit at a point-of-sale. The system utilizes radio frequency tags and is configured to reduce the effects of energy sharing, shadowing and nulls.

Therefore, an aim of the invention is to provide a refrigerator having an improved RFID tag detection rate so that a relatively small number of RFID readers can be used.

A refrigerator, according to the present invention is defined by claim 1.

Optional features are set forth in claims to 2 to 5 appended hereto.

An embodiment of the present invention will now be described, by way of example, with reference to the accompanying drawings, in which:
Figure 1 is a perspective view illustrating the inside of a refrigerator having an improved RFID tag recognition rate according to the present invention;
Figures 2A and 2B are sectional views illustrating RFID readers slantingly installed in walls of a storage chamber;
Figure 3 is a schematic view illustrating operation of the RFID readers for communicating with an RFID tag attached to food; and
Figure 4 is a block diagram of the refrigerator of Figure 1.

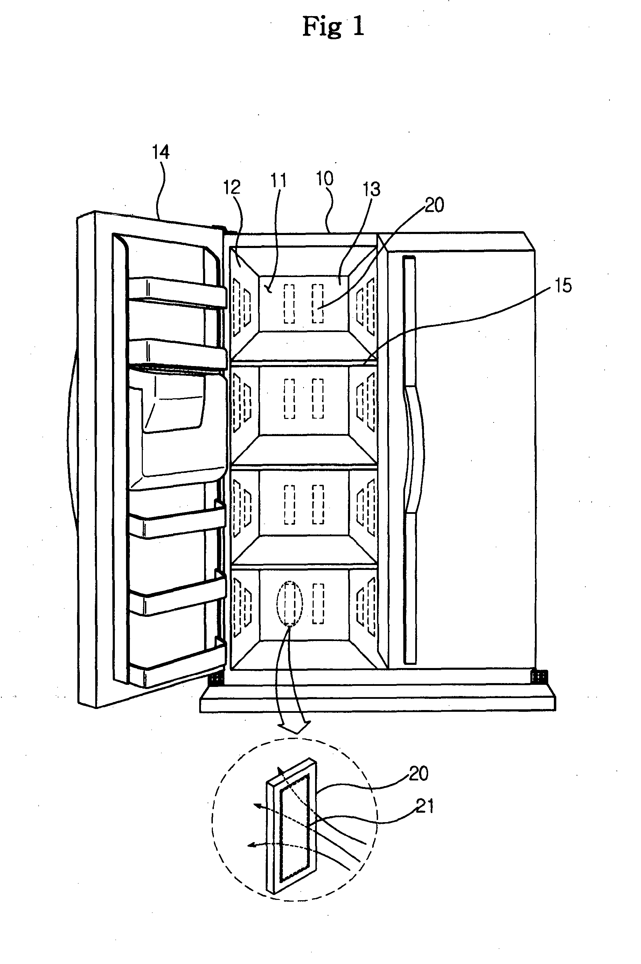

Referring to Figures 1 to 3, a refrigerator according to the present invention comprises a cabinet 10, including storage chambers 11, and having doors 14 hinged to the fronts of the chambers 11. The inside of each of the storage chambers 11 is divided into several spaces by racks 15, which are detachably installed in the storage chambers 11.

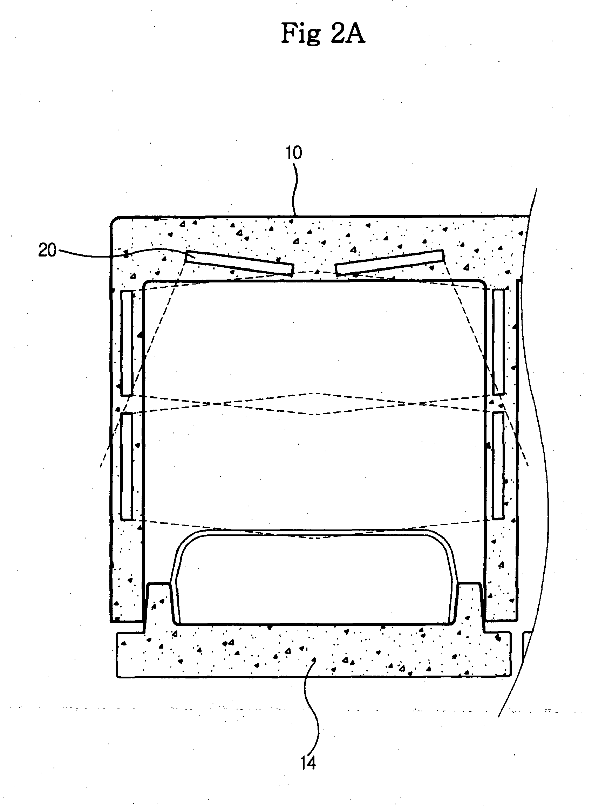

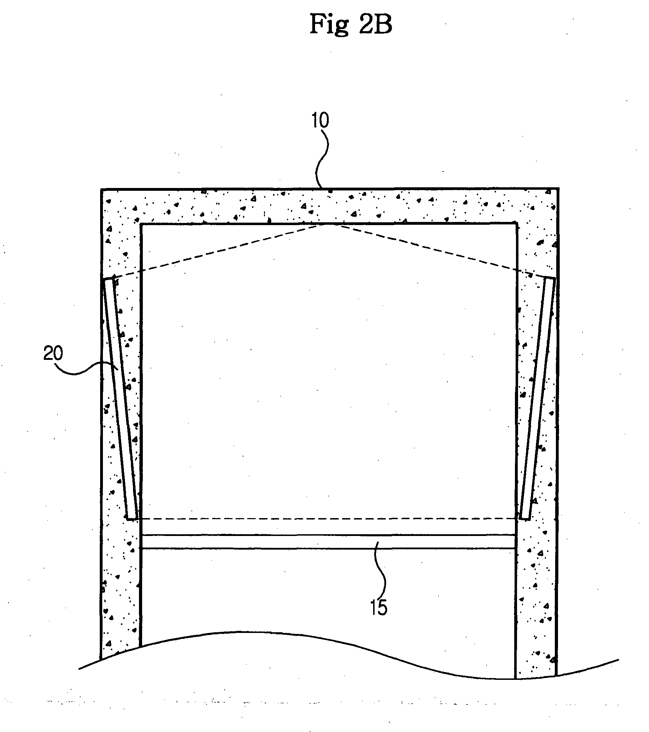

Referring to Figures 2A and 2B, a plurality of RFID readers 20 are installed in the side walls 12 and the rear walls 13 of the storage chambers 11. Each of the RFID readers 20 includes a plate-shaped case containing a coil antenna 21. The loop plane of each coil antenna 21 is positioned in parallel with a front or rear surface of the case so that magnetic lines pass through the front or rear surface of the case.

Preferably, but not necessarily, as shown in Figure 2A, the RFID readers 20, installed in the rear wall 13 of the storage chamber 11, slant in a transverse direction. That is, each of the RFID readers 20, installed in the rear wall 13 of the storage chamber 11, is arranged such that the distance between one side part of the RFID reader 20, close to the central part of the storage chamber 11, and the inside of the storage chamber 11 is shorter than the distance between the other side part of the RFID reader 20 and the inside of the storage chamber 11 (see Figure 2A), or the distance between one side part of the RFID reader 20, close to the central part of the storage chamber 11, and the storage chamber 11 is longer than the distance between the other side part of the RFID reader 20 and the inside of the storage chamber 11.

Furthermore, preferably, but not necessarily, as shown in Figure 2B, the RFID readers 20 installed in the side walls 12 of the storage chamber 11 slant in the longitudinal direction. That is, each of the RFID readers 20 is installed in the side walls 12 of the storage chamber 11 such that the distance between the upper part of the RFID reader 20 and the inside of the storage chamber 11 is shorter than the distance between the lower part of the RFID reader 20 and the inside of the storage chamber 11 or (as shown in Figure 2B) the distance between the upper part of the RFID reader 20 and the storage chamber 11 is longer than the distance between the lower part of the RFID reader 20 and the inside of the storage chamber 11. As described, in the case that the RFID readers 20 are slantingly installed in the side and rear walls 12, 13 of the storage chambers 11, the antennas 21, contained in the RFID readers 20, are slantingly installed also.

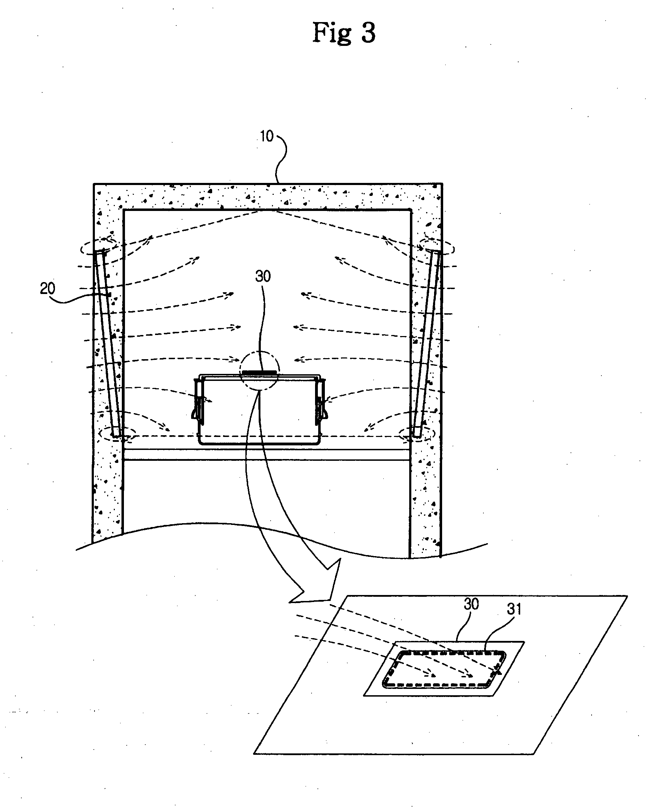

Since the antennas 21 of the RFID readers 20 slant with respect to the side and/or rear walls 12 and 13 of the storage chamber 11, it is possible precisely to recognize an RFID tag 30 (in Figure 3) attached to food stored in the storage chamber 11 even when the RFID readers 20 are not installed in upper and lower walls of the storage chamber 11.

A plurality of the RFID readers 20, which are slantingly installed, eliminates blind areas in the storage chambers 11, in which RFID tags 30 cannot be detected by the RFID readers 20. That is, when an antenna 31 (in Figure 3) of an RFID tag 30 is located in parallel with the bottom surface of the storage chamber 11, it is impossible to detect the RFID tag 30 because the magnetic flux of the RFID readers 20, conventionally installed in the side and rear walls 12, 13 of the storage chamber 11, do not induce currents in the RFID tag. Thus, additional RFID readers 20, which are installed in the upper and lower walls of the storage chamber 11, are necessary to solve the above problem. In the present invention, RFID readers 20, which are slantingly installed in the side and/or rear walls 12 and 13 of the storage chamber 11, can detect the RFID tag 30 located parallel to the bottom surface of the storage chamber 11.

When the RFID readers 20 are slantingly installed as shown in Figure 1 and Figures 2A and 2B, the magnetic flux from the antennas 21 of the RFID readers 20, having horizontal loop planes differing from conventional RFID readers, which are perpendicularly installed, cut the antennas 31 of the RFID tag 30.,

As described above, in the case that the RFID readers 20 are slantingly installed in the side and rear walls 12, 13 of the storage chambers 11, it is possible to detect the RFID tag 30, the antenna 31 of which has a vertical or horizontal loop plane, only using the RFID readers 20 installed in the side or rear walls 12, 13 of the storage chamber 11. Further, even when the RFID tag 30 is located in any direction in the storage chamber 11, at least one of the RFID readers 20 installed in the side walls 12 or the rear wall 13 of the storage chamber 11 can recognize the RFID tag 30. Accordingly, it is unnecessary to install additional RFID readers 20 in the upper and lower walls of the storage chamber 11.

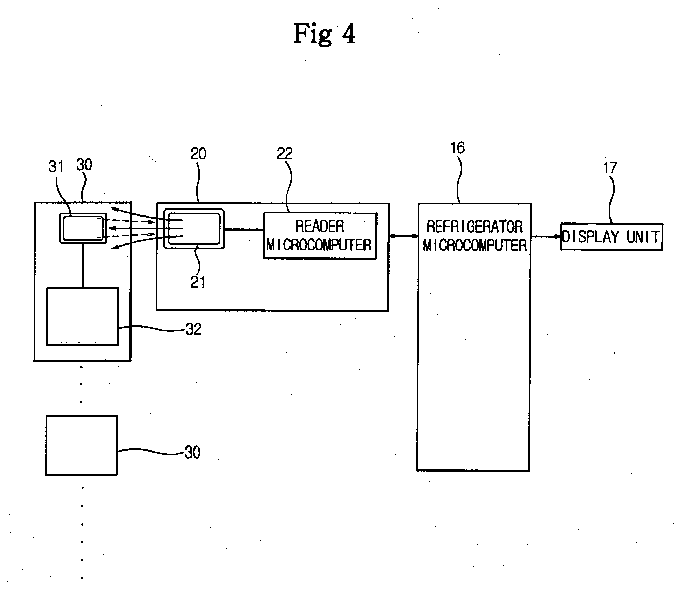

As shown in Figure 4, in addition to the above-described elements, the refrigerator of Figure 1 further comprises a refrigerator microcomputer 16 for controlling the operation of the refrigerator, and a display unit 17 for displaying the kinds and quantities of foods stored in the refrigerator and the number of days foods have been stored, or displaying the operating state of the refrigerator.

Furthermore, each of the RFID readers 20 includes a reader microcomputer 22 connected to the antenna 21. The reader microcomputer 22 analyzes identification codes (ID) or data from RFID tags 30 by sending an RF signal or receiving an RF signal transmitted from the RFID tag 30 according to a firmware algorithm, and communicates with the refrigerator microcomputer 16. Although not shown in Figures 1 to 4, each of the RFID readers 20 further includes a tuning circuit for transmitting the RF signal, and an RF carrier generator.

Hereinafter, operation of the refrigerator having improved recognition rate of RFID tags in accordance with an exemplary embodiment of the present invention will be described.

During the operation of the refrigerator, the reader microcomputer 22 transmits current to the antennas 21 of the RFID readers 20 every cycle, thereby forming a magnetic field in the storage chamber 11. The magnetic field generates current in the antenna 31 of the RFID tag 30, thereby supplying energy to the RFID tag 30 (only when the RFID tag is a passive tag). A tag chip 32, which is activated by the energy, transmits the ID and data of the RFID tag 30, attached to food, to the RFID readers 20. Preferably, but not necessarily, the RFID readers 20 are designed such that, although a plurality of the RFID readers 20 may simultaneously recognize the RFID tag 30, the RFID readers 20 can recognize the RFID tag 30 using an anti-collision function.

The reader microcomputers 22 analyze the ID and data transmitted from the RFID tag 30, and transmit the analyzed data to the refrigerator microcomputer 16. The refrigerator microcomputer 16 changes the display of the display unit 17 according to the data transmitted from the RFID readers 22. For example, in the case that food is additionally supplied to the inside of the storage chamber 11, an RFID tag 30 attached to the newly supplied food transmits its ID and data to the RFID readers 20, and the RFID readers 20 analyze the ID and data and transmit the analyzed data to the refrigerator microcomputer 16. Then, the refrigerator microcomputer 16 confirms the newly supplied food through the analyzed data, and changes the total number of food items, displayed by the display unit 17, to a new total number incremented by the number of the added food items.

As apparent from the above description, the present invention provides a refrigerator having improved recognition rate of RFID tags, in which antennas of RFID readers are slantingly installed in side and rear walls of storage chambers. Thereby, it is possible to recognize all of RFID tags attached to foods stored in the storage chambers without installing the RFID readers in upper and lower walls of the storage chambers.

## Claims

1. A refrigerator, comprising:
storage chambers (11);
a plurality of RFID readers (20), each of which includes an antenna (21), for receiving data from RFID tags attached to goods stored in the storage chambers,
wherein the respective antennas of the RFID readers have coiled shapes,
**characterised in that** said antennas are installed in walls (12, 13) of storage chambers such that the loop planes of each antenna are slanted with respect to the wall in which they are installed, and the slanting direction of the loop planes of the antennas differ according to the walls in which the antennas are installed.

2. The refrigerator according to claim 1,
wherein the storage chambers (11) comprise side walls (12), and
wherein loop planes of the antennas (21) of the RFID readers (20) installed in the side walls (12) of the storage chambers (11) slant with respect to a longitudinal direction of the side walls.

3. The refrigerator according to claim 1 or 2,
wherein the storage chambers (11) comprise rear walls (13), and
wherein loop planes of the antennas (21) of the RFID readers (20) installed in the rear walls (13) of the storage chambers (11) slant with respect to a transverse direction of the rear walls.

## Patentansprüche

1. Kühlgerät, umfassend:
Lagerkammern (11);
eine Vielzahl von RFID-Lesern (20), von denen jeder eine Antenne (21) zum Empfangen von Daten von RFID-Etiketts, die an Gütern, die in den Lagerkammern gelagert werden, angebracht sind, enthält,
wobei die jeweiligen Antennen der RFID-Leser gewundene Formen aufweisen,
**dadurch gekennzeichnet, dass** die Antennen in Wänden (12, 13) von Lagerkammern installiert sind, so dass die Schleifenebenen jeder Antenne in Bezug auf die Wand, in der sie installiert sind, geneigt sind und die Neigungsrichtung der Schleifenebenen der Antennen sich gemäß den Wänden, in denen die Antennen installiert sind, unterscheiden.

2. Kühlgerät nach Anspruch 1,
wobei die Lagerkammern (11) Seitenwände (12) umfassen und
wobei die Schleifenebenen der Antennen (21) der RFID-Leser (20), die in den Seitenwänden (12) der Lagerkammern (11) installiert sind, in Bezug auf eine Längsrichtung der Seitenwände geneigt sind.

3. Kühlgerät nach Anspruch 1 oder 2,
wobei die Lagerkammern (11) Rückwände (13) umfassen und
wobei die Schleifenebenen der Antennen (21) der RFID-Leser (20), die in den Rückwänden (13) der Lagerkammern (11) installiert sind, in Bezug auf eine Querrichtung der Rückwände geneigt sind.

## Revendications

1. Réfrigérateur, comprenant :
des chambres de stockage (11) ;
une pluralité de lecteurs RFID (20), chacun d'eux comportant une antenne (21), pour recevoir des données d'étiquettes RFID attachées à des produits stockés dans les chambres de stockage,
dans lequel les antennes respectives des lecteurs RFID ont des formes de serpentin,
**caractérisé en ce que** lesdites antennes sont installées dans des parois (12, 13) de chambres de stockage de telle sorte que les plans de boucle de chaque antenne soient inclinés par rapport à la paroi dans laquelle elles sont installées, et le sens d'inclinaison des plans de boucle des antennes diffère en fonction des parois dans lesquelles les antennes sont installées.

2. Réfrigérateur selon la revendication 1,
dans lequel les chambres de stockage (11) comprennent des parois latérales (12), et
dans lequel les plans de boucle des antennes (21) des lecteurs RFID (20) installés dans les parois latérales (12) des chambres de stockage (11) sont inclinés par rapport à un sens longitudinal des parois latérales.

3. Réfrigérateur selon la revendication 1 ou 2,
dans lequel les chambres de stockage (11) comprennent des parois arrière (13), et
dans lequel les plans de boucle des antennes (21) des lecteurs RFID (20) installés dans les parois arrière (13) des chambres de stockage (11) sont inclinés par rapport à un sens transversal des parois arrière.
